# EUROPEAN PATENT APPLICATION

(11) **EP 4 787 575 A1**
(43) Date of publication of application: **05.08.2026**
(21) Application number: 24870141.9
(22) Date of filing: 12.08.2024
(51) Int. Cl.: H01M 50/242, H01M 50/271, H01M 50/24

(54) **HOUSING ASSEMBLY, ENERGY STORAGE DEVICE, AND ENERGY STORAGE SYSTEM**

(30) Priority: 28.09.2023 CN 202322677323 U
(71) Applicant: BYD Company Limited, Shenzhen, Guangdong 518118 (CN)
(72) Inventor: GAO, Yunjie, Shenzhen, Guangdong 518118 (CN); LI, Mingxing, Shenzhen, Guangdong 518118 (CN); XU, Guangdong, Shenzhen, Guangdong 518118 (CN)
(74) Representative: Mathys & Squire
(86) International application number: PCT/CN2024/111371
(87) International publication number: WO 2025/066593

(57) **Abstract**

A housing assembly (2), an energy storage device, and an energy storage system. The housing assembly (2) is adapted to define an accommodating space, and the housing assembly (2) includes: a first housing (21); and a first reinforcing structure, the first reinforcing structure being provided on an outer wall of the first housing (21), where the outer wall of the first housing (21) is the surface of the side of the first housing (21) facing away from the accommodating space.

## Description

### CROSS-REFERENCE TO RELATED APPLICATIONS

The present disclosure claims priority to Chinese Patent Application No. 202322677323.1 filed on September 28, 2023, entitled "HOUSING ASSEMBLY, ENERGY STORAGE DEVICE, AND ENERGY STORAGE SYSTEM", which is incorporated herein by reference in its entirety.

### FIELD

The present disclosure relates to the technical field of power supply, and more particularly, to a housing assembly, an energy storage device and an energy storage system.

### BACKGROUND

Energy storage devices have attracted more and more attention due to their flexibility in application, high reliability, high energy density, and the like. In the related art, an energy storage device generally includes a battery cell and a housing accommodating the battery cell. The battery cell is fixed inside the housing. In order to achieve a light and thin design, the housing is relatively thin in thickness and is prone to deformation.

Therefore, there is a need to provide a new technical solution to solve the above technical problems.

### SUMMARY

It is an object of the present disclosure to provide a new technical solution for a housing assembly, an energy storage device and an energy storage system.

According to a first aspect of the present disclosure, a housing assembly is provided. The housing assembly is configured to define an accommodation space, and the housing assembly includes:
a first housing; and
a first reinforcing structure, the first reinforcing structure being arranged on an outer wall of the first housing, and the outer wall of the first housing being a surface of a side of the first housing facing away from the accommodation space.

In an embodiment, the first reinforcing structure includes:
a first reinforcing rib, the first reinforcing rib extending along a first direction, and the first direction representing a length direction of the first housing.

In an embodiment, the first reinforcing structure includes:
a first reinforcing rib, the first reinforcing rib extending along a second direction, and the second direction representing a width direction of the first housing.

In an embodiment, a plurality of the first reinforcing ribs are arranged on the outer wall of the first housing, and a number of the first reinforcing ribs arranged in a middle region of the first housing along the first direction is greater than a number of the first reinforcing ribs arranged in two side regions of the first housing along the first direction.

In an embodiment, the housing assembly further includes:
a wall hanging assembly, the wall hanging assembly is arranged on the outer wall of the first housing, and the wall hanging assembly is configured to hang the first housing on a wall.

In an embodiment, the wall hanging assembly includes:
a first wall hanging piece and a second wall hanging piece, and the first reinforcing structure is arranged between the first wall hanging piece and the second wall hanging piece.

In an embodiment, the housing assembly further includes:
a fixing frame, the fixing frame is arranged on a side of an inner wall of the first housing, and the fixing frame is configured to carry a functional device.

In an embodiment, a limiting structure is arranged at both ends of the fixing frame, and the limiting structure is configured to position the functional device.

In an embodiment, the limiting structure is a limiting protrusion formed by a folded edge at both ends of the fixing frame.

In an embodiment, the housing assembly further includes:
a first cover and a second cover, and the first cover and the second cover are arranged spaced apart on the inner wall of the first housing.

In an embodiment, the housing assembly further includes a first side plate, the first side plate is arranged on a side of the inner wall of the first housing, a side edge of the first side plate is connected to the inner wall of the first housing, and the first side plate is connected to the ends on the same side of the first cover and the second cover.

In an embodiment, the first side plate is arranged with a notch, and a projection of a terminal pole of the functional device along the first direction is located within a projection of the notch along the first direction.

In an embodiment, the housing assembly further includes a second housing opposite to the first housing, a baffle wall is arranged at both ends of the second housing in the first direction, the second housing is arranged on the first housing, and the baffle wall is arranged in the notch, and the first direction represents the length direction of the first housing.

In an embodiment, the housing assembly further includes a second side plate and a third side plate, the second side plate and the third side plate are arranged on a side of the inner wall of the first housing, and the second side plate and the third side plate are respectively connected to same-side ends of the first cover and the second cover;
along the second direction, a gap is arranged between the second side plate and the third side plate, and the second direction represents the width direction of the first housing.

In an embodiment, the projection of the terminal pole of the functional device along the first direction is located within a projection of the gap along the first direction.

In an embodiment, the housing assembly further includes the second housing opposite to the first housing, the baffle wall is arranged at both ends of the second housing in the first direction, the second housing is arranged on the first housing, and the baffle wall is arranged in the gap, and the first direction represents the length direction of the first housing.

In an embodiment, the housing assembly further includes a decorative cover, the decorative cover is arranged on an outer wall of the second housing, and the outer wall of the second housing is a surface of a side of the second housing facing away from the battery cell.

In an embodiment, a second reinforcing structure is arranged on the outer wall of the second housing, and the second reinforcing structure is arranged between the decorative cover and the second housing.

In an embodiment, the second reinforcing structure includes a second reinforcing rib, and the second reinforcing rib extends along the second direction, and the second direction represents the width direction of the second housing

In an embodiment, a sealing strip is arranged at an edge of the second housing and the first housing.

In an embodiment, an insulating frame is fixed on the inner wall of the first housing, an electric connection sheet is fixed on at least one end of the insulating frame in the first direction, a welding position is arranged on the electric connection sheet at a position corresponding to the electrode of the battery cell, and the first direction represents the length direction of the first housing.

In an embodiment, at least one of the first cover and the second cover is arranged with a handle.

According to a second aspect of the present disclosure, an energy storage device is provided. The energy storage device includes the housing assembly according to any one of the preceding embodiments.

According to a third aspect of the present disclosure, an energy storage device is provided. The energy storage device includes the housing assembly, and the functional device is a battery cell.

According to a fourth aspect of the present disclosure, an energy storage device is provided. The energy storage device includes a housing assembly and a battery cell, the housing assembly is configured to define an accommodation space, and the housing assembly includes:
a first housing; and
a first reinforcing structure, the first reinforcing structure is arranged on an outer wall of the first housing, the outer wall of the first housing is a surface of a side of the first housing facing away from the accommodation space, and the first reinforcing structure includes a first reinforcing rib, and the first reinforcing rib extends along an arrangement direction of the battery cell.

According to a fifth aspect of the present disclosure, an energy storage system is provided. The energy storage system includes an energy storage device and an electric device, and the energy storage device is configured to supply power to the electric device, and the energy storage device is the energy storage device according to any one of the preceding embodiments.

In the embodiments of the present disclosure, the first reinforcing structure enhances the supporting force of the first housing, thereby avoiding deformation of the first housing caused by excessive weight of the battery cells carried by the first housing, which affects the overall shape and the stability of the connection of the housing assembly.

In addition, the first reinforcing structure is arranged on the outer wall of the first housing, the accommodation space is not occupied, and the capacity of the battery cells in the accommodation space is increased. Since the first reinforcing structure is arranged on the outer wall of the first housing, the first reinforcing structure does not interfere with the functional component.

Other features and advantages of the present disclosure will become apparent from the following detailed description of exemplary embodiments with reference to the accompanying drawings.

### BRIEF DESCRIPTION OF THE DRAWINGS

The accompanying drawings, which are incorporated into and constitute a part of this specification, illustrate embodiments of the present disclosure and, together with the description, serve to explain the principles of the present disclosure.
FIG. 1 is an exploded view of an energy storage device according to an embodiment of the present disclosure.
FIG. 2 is a schematic view of a first housing of the energy storage device according to an embodiment of the present disclosure.
FIG. 3 is an assembly schematic view of the first housing and the battery cells of the energy storage device according to an embodiment of the present disclosure.
FIG. 4 is a wiring schematic view of the energy storage device according to an embodiment of the present disclosure.
FIG. 5 is an exploded view of the energy storage device according to an embodiment of the present disclosure from another angle.
FIG. 6 is a schematic view of another first housing according to an embodiment of the present disclosure.

Explanation of Reference Signs:
1, battery cell; 2, housing assembly; 21, first housing; 22, first reinforcing rib; 23, wall hanging assembly; 231, first wall hanging piece; 232, second wall hanging piece; 24, first cover; 25, second cover; 26a, first side plate; 26b, second side plate; 26c, third side plate; 26d, notch; 26e, gap; 27, second housing; 28, baffle wall; 29, second reinforcing rib; 3, fixing frame; 31, limiting protrusion; 32, upper bracket; 33, middle bracket; 34, lower bracket; 4, decorative cover; 5, sealing strip; 6, insulating frame; 7, electric connection sheet; 8, welding position; 9, handle.

### DETAILED DESCRIPTION

Various exemplary embodiments of the present disclosure will now be described in detail with reference to the accompanying drawings. It will be noted that the relative arrangement of the components and steps, the numerical expressions, and values set forth in these embodiments do not limit the scope of the present disclosure unless otherwise specified.

The following description of at least one exemplary embodiment is merely illustrative in practice and is not intended to limit the present disclosure and its application or use.

Techniques, methods, and apparatus known to a person skilled in the relevant art cannot be discussed in detail herein. However, the techniques, methods, and apparatus should be regarded as part of the specification as appropriate.

In all of the examples shown and discussed herein, any specific values should be construed as merely illustrative, and not as limiting. Thus, other examples of the exemplary embodiments can have different values.

It should be noted that like reference numerals and letters refer to like items in the following drawings, and therefore, once an item is defined in one drawing, it is not necessary to further discuss it in the following drawings.

In one embodiment of the present disclosure, a housing assembly 2 is provided. The housing assembly 2 is configured to define an accommodation space. The accommodation space is configured to accommodate at least part of a functional device. The functional device can be, but is not limited to, a battery cell 1, a circuit board, a heat sink, etc. The housing assembly 2 includes a first housing 21 and a first reinforcing structure.

The first reinforcing structure is arranged on an outer wall of the first housing 21. The outer wall of the first housing 21 is a surface of a side of the first housing 21 facing away from the accommodation space.

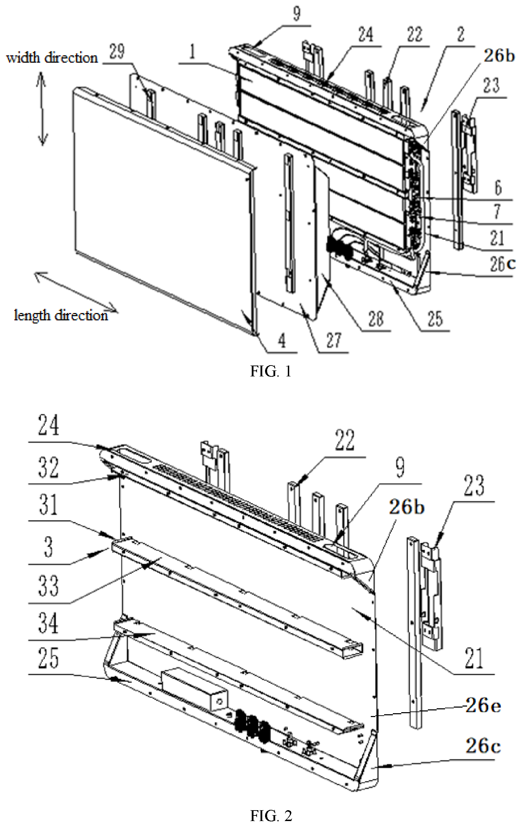

As shown in FIG. 1 to FIG. 3, the housing assembly 2 is in the shape of a cuboid. A functional device, such as a battery cell 1, is arranged inside the housing assembly 2, and the battery cell 1 is protected by the housing assembly 2. The housing assembly 2 includes a first housing 21 and a first reinforcing structure. The battery cell 1 is arranged on the inner wall of the first housing 21. The first reinforcing structure is fixed on the outer wall of the first housing 21 by screws. Alternatively, the first reinforcing structure can be integrally formed with the first housing 21. The first reinforcing structure enhances the supporting force of the first housing 21, thereby avoiding deformation of the first housing 21 caused by an excessive weight of the battery cell 1 carried by the first housing 21, which affects the overall shape and the stability of the connection of the housing assembly 2.

In addition, the first reinforcing structure is arranged on the outer wall of the first housing 21, so that the first reinforcing structure does not occupy the accommodation space, and the capacity of the battery cell 1 in the accommodation space is increased. Since the first reinforcing structure is arranged on the outer wall of the first housing 21, the first reinforcing structure does not interfere with functional devices, such as the battery cell 1.

The housing assembly 2 is not limited to the above structure in the embodiments of the present disclosure, and can be arranged according to actual needs by a person skilled in the art. For example, the housing assembly 2 is in a shape of a cylinder, an elliptical cylinder, etc.

In an embodiment, the first reinforcing structure includes a first reinforcing rib 22, the first reinforcing rib 22 extends along a first direction, and the first direction represents a length direction of the first housing 21.

In this embodiment, the first housing 21 is in a rectangular shape. The length direction of the first housing 21 is an extension direction of a long side. The first reinforcing rib 22 extends along the length direction of the first housing 21. The first reinforcing rib 22 is made of metal, plastic, ceramic, etc. The first reinforcing rib 22 is in a strip structure. The number of the first reinforcing rib 22 is one or more. For example, the first reinforcing rib 22 is fixed on the outer wall of the first housing 21 by bolt connection, riveting, snapping, welding, etc.

Alternatively, as shown in FIG. 1, the first reinforcing structure includes the first reinforcing rib 22, the first reinforcing rib 22 extends along a second direction, and the second direction represents a width direction of the first housing 21.

The width direction of the first housing 21 is an extension direction of a wide side. The size of the length direction of the first housing 21 is greater than the size of the width direction of the first housing 21. The first reinforcing rib 22 extends along the width direction of the first housing 21. The material, the number, and the connection mode of the first reinforcing rib 22 are as described above.

In an embodiment, as shown in FIG. 1, the first reinforcing rib 22 extends along an arrangement direction of the battery cell 1.

In this embodiment, the battery cell 1 is in a plurality. The plurality of battery cells 1 are arranged along the second direction. The extension direction of the first reinforcing rib 22 is consistent with the arrangement direction of the plurality of battery cells 1. The length direction of the battery cell 1 is perpendicular to the length direction of the first reinforcing rib 22. In this way, the structural strength of the first housing 21 can be further increased.

The arrangement mode of the first reinforcing rib 22 is not limited to the above embodiment, and can be selected according to actual needs by a person skilled in the art.

In an embodiment, as shown in FIG. 1, a plurality of the first reinforcing ribs 22 are arranged on the outer wall of the first housing 21, and a number of the first reinforcing ribs 22 arranged in a middle region of the first housing 21 along the first direction is greater than a number of the first reinforcing ribs 22 arranged in two side regions of the first housing 21 along the first direction.

Generally, the middle region of the first housing 21 is prone to deformation due to bearing of excessive weight. The more first reinforcing ribs 22 there are, the better the reinforcing effect on the region where the first housing 21 is arranged. In this example, the number of the first reinforcing ribs 22 arranged in the middle region of the first housing 21 along the first direction is greater than the number of the first reinforcing ribs 22 arranged in the two side regions of the first housing 21 along the first direction. For example, three first reinforcing ribs 22 are arranged in the middle region, and one first reinforcing rib 22 is arranged in each of the two side regions. In this way, the structural strength of the middle region can be effectively reinforced, and meanwhile, the uneven distribution of the first reinforcing ribs 22 can achieve the effect of weight reduction.

In an embodiment, the housing assembly 2 further includes a wall hanging assembly 23, the wall hanging assembly 23 is arranged on the outer wall of the first housing 21, and the wall hanging assembly 23 is configured to hang the first housing 21 on a wall.

As shown in FIGS. 1 to 3, the wall hanging assembly 23 includes a wall hanging hook. The wall hanging hook is configured to cooperate with a wall hanging piece. The wall hanging hook is fixed on the outer wall of the first housing 21 by screws. The wall hanging piece is fixed on the wall by an expansion bolt. The wall hanging hook fixedly connected to the first housing 21 is connected to the wall hanging piece on the wall, so that the first housing 21 is hung and fixed on the wall. The wall hanging assembly 23 and the first housing 21 can be integrally formed or assembled together in a detachable manner.

In the embodiment of the present disclosure, the first reinforcing structure and the wall hanging assembly 23 are arranged on the outer wall of the first housing 21, so that the two components share one space, space waste is reduced, and space utilization is improved.

In an embodiment, the wall hanging assembly 23 includes a first wall hanging piece 231 and a second wall hanging piece 232, and the first reinforcing structure is arranged between the first wall hanging piece 231 and the second wall hanging piece 232.

For example, as shown in FIGS. 1, 2 and 5, the first wall hanging piece 231 and the second wall hanging piece 232 are respectively arranged at the two ends of the first housing 21 in the length direction. The plurality of first reinforcing ribs 22 are arranged between the first wall hanging piece 231 and the second wall hanging piece 232. In this way, when the wall hanging operation of the energy storage device is performed, the first wall hanging piece 231 and the second wall hanging piece 232 can be easily observed, so that the wall hanging operation of the energy storage device is easier.

The arrangement of the wall hanging assembly 23 and the first reinforcing ribs 22 is not limited to the above embodiment, and can be arranged according to actual needs by a person skilled in the art.

In an embodiment, the housing assembly 2 includes a fixing frame 3. The fixing frame 3 is arranged on the inner wall of the first housing 21, and the fixing frame 3 is configured to carry the battery cell 1.

In this embodiment, the fixing frame 3 is a frame structure. The number of the fixing frame 3 is one or more. The battery cell 1 is directly or indirectly mounted on the fixing frame 3. The fixing frame 3 can make the mounting of the battery cell 1 easier.

In addition, the battery cell 1 is indirectly fixed on the first housing 21 by the fixing frame 3. Since the fixing frame 3 is fixedly connected to the first housing 21, the fixing frame 3 can also improve the bearing capacity of the first housing 21.

In this embodiment, a limiting structure is arranged at both ends of the fixing frame 3, and the limiting structure is configured to position the functional device.

For example, the limiting structure is a protrusion, a groove or the like for positioning the battery cell 1. The limiting structure can effectively position the battery cell 1, and avoid movement of the battery cell 1 on the fixing frame 3.

Further, the limiting structure is a limiting protrusion 31 formed by folding edges at both ends of the fixing frame 3.

For example, the fixing frame 3 includes a metal plate. Edges of both ends of the metal plate are folded to form the limiting protrusions 31. In this way, the limiting protrusions 31 are easy to manufacture, and the step of connecting the limiting protrusions 31 with the fixing frame 3 is saved. During installation, the battery cell 1 is fixed on the fixing frame 3 and arranged between the two limiting protrusions 31.

The height of the limiting protrusion 31 is not limited herein, and can be arranged according to actual needs by a person skilled in the art.

In an embodiment, as shown in FIG. 2, the fixing frame 3 extends along the length direction of the first housing 21 and is fixed on the inner wall of the first housing 21, so that the battery cell 1 is arranged on the inner wall of the first housing 21 in the length direction. The first reinforcing rib 22 extends along the width direction and is fixed on the outer wall of the first housing 21. In this example, the first reinforcing rib 22 is arranged orthogonally with the fixing frame 3. Compared with the arrangement in which the extending direction of the first reinforcing rib 22 is parallel with the extending direction of the fixing frame 3, this arrangement can effectively improve the structural strength of the first housing 21 in different directions. The limiting protrusions 31 on the fixing frame 3 can define the position of the battery cell 1, and prevent shaking of the battery cell 1 during installation or use, thereby preventing damage to the energy storage device.

In the embodiments of the present disclosure, the fixing frame 3 and the first reinforcing rib 22 are not limited to the orthogonal arrangement, and can be arranged to intersect at any angle. A person skilled in the art can select the intersection angle according to actual needs.

As shown in FIG. 2, a plurality of fixing frames 3 are arranged on the inner wall of the first housing 21. The fixing frame 3 includes an upper bracket 32, a middle bracket 33 and a lower bracket 34. Both ends of the upper bracket 32 form downward limiting protrusions 31. Both ends of the middle bracket 33 form upward and/or downward limiting protrusions 31. Both ends of the lower bracket 34 form upward limiting protrusions 31. The limiting protrusions 31 on the three fixing frames 3 are configured to block the battery cells 1 arranged on different fixing frames 3, thereby preventing shaking of the battery cells 1 during installation and/or use, and preventing affecting the stability of the energy storage device.

The number and arrangement of the fixing frames 3 are not limited to the above embodiments, and can be arranged according to actual needs by a person skilled in the art.

In an embodiment, as shown in FIG. 1 to FIG. 5, the housing assembly 2 further includes a first cover 24 and a second cover 25, and the first cover 24 and the second cover 25 are arranged spaced apart on the inner wall of the first housing 21.

In this embodiment, the first cover 24 and the second cover 25 are respectively arranged at the two ends of the first housing 21 in the width direction. The first cover 24 is arranged on the top of the first housing 21, and the second cover 25 is arranged on the bottom of the first housing 21. The first cover 24 and the second cover 25 are fixed on the inner wall of the first housing 21. The first cover 24 and the second cover 25 are made of metal, plastic, ceramic, wood, etc. The first cover 24 and the second cover 25 are fixed on the inner wall of the first housing 21 by welding, bonding, riveting, snapping, etc. to form an accommodation space between the first cover 24 and the second cover 25. The first cover 24 and the second cover 25 can effectively improve the structural strength of the first housing 21.

In an embodiment, the first housing 21, the first cover 24 and the second cover 25 are all made of metal material, and are integrally formed by sheet metal processing. This way saves the step of connecting the first housing 21, the first cover 24 and the second cover 25, and can more effectively improve the connection strength and the structural strength of the first cover 24, the second cover 25 and the first housing 21 compared with other connection methods.

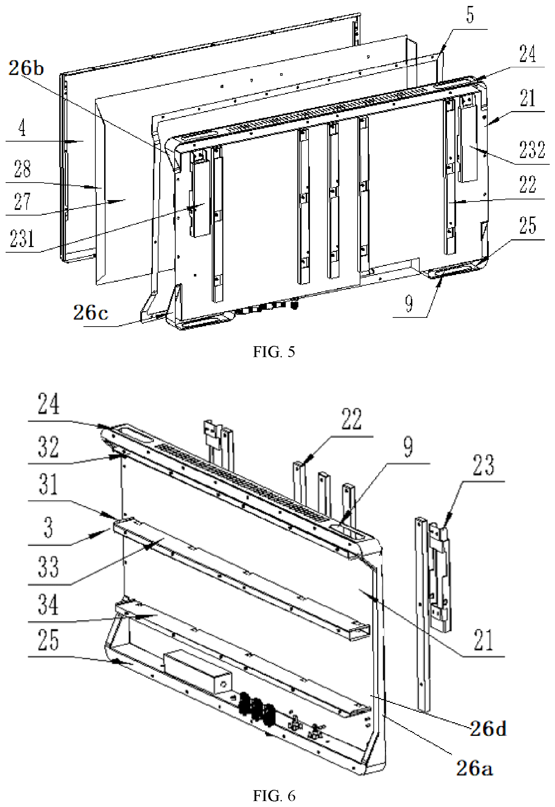

In an embodiment, as shown in FIG. 6, the housing assembly 2 further includes a first side plate 26a, and the first side plate 26a is arranged on a side of the inner wall of the first housing 21. One side edge of the first side plate 26a is connected to the inner wall of the first housing 21, and the first side plate 26a is connected to same-side ends of the first cover 24 and the second cover 25.

In this embodiment, the first side plate 26a is made of metal, plastic, ceramic, wood, etc. The first side plate 26a is fixed on the inner wall of the first housing 21 and/or connected to the first cover 24 and the second cover 25 by welding, bonding, riveting, snapping, etc. For example, the first side plate 26a is arranged at the two ends of the first housing 21 along the first direction. The first side plate 26a is connected to the first cover 24 and the second cover 25. The connection between the first housing 21 and the first cover 24 and the second cover 25 is reinforced by the first side plate 26a, which can effectively improve the structural strength of the whole of the first housing 21, the first cover 24 and the second cover 25.

The arrangement of the first side plate 26a is not limited to the above embodiment, and can be arranged according to actual needs by a person skilled in the art.

In an embodiment, as shown in FIG. 6, the first side plate 26a is arranged with a notch 26d. A projection of a terminal pole of the functional device along the first direction is located within a projection of the notch 26d along the first direction.

For example, the notch 26d has a trapezoidal structure with an opening at one end. The notch 26d is configured for the welding of the terminal pole of the battery cell 1, and the notch 26d is arranged on the side of the housing assembly 2 to facilitate the installation and maintenance of the battery cell 1.

In an embodiment, the housing assembly 2 further includes a second housing 27 opposite to the first housing 21, a baffle wall 28 is arranged at both ends of the second housing 27 in the first direction, the second housing 27 is arranged on the first housing 21, the baffle wall 28 is arranged in the notch 26d, and the first direction represents the length direction of the first housing 21.

The top of the second housing 27 is connected to the first cover 24. The bottom of the second housing 27 is connected to the second cover 25. The baffle wall 28 is embedded in the notch 26d in the trapezoidal structure. The second housing 27, the first cover 24, the first housing 21, the second cover 25, the baffle wall 28 and the first side plate 26a form a cuboid, that is, the whole housing assembly 2 is a cuboid.

The arrangement of the second housing 27 and the first housing 21 facilitates the installation of the battery cell 1. The second housing 27 and the first housing 21 can effectively protect the battery cell 1.

The housing assembly 2 is not limited to the above structure in the embodiments of the present disclosure, and can be arranged according to actual needs by a person skilled in the art.

In an embodiment, the housing assembly 2 further includes a second side plate 26b and a third side plate 26c, the second side plate 26b and the third side plate 26c are arranged on a side of the inner wall of the first housing 21, and the second side plate 26b and the third side plate 26c are respectively connected to same-side ends of the first cover 24 and the second cover 25.

Along the second direction, a gap 26e is arranged between the second side plate 26b and the third side plate 26c, and the second direction represents the width direction of the first housing 21.

As shown in FIG. 1 to FIG. 5, the second side plate 26b and the third side plate 26c are triangular. The second side plate 26b and the third side plate 26c form the gap 26e. Two right-angle sides of the second side plate 26b and the third side plate 26c of the first cover 24 are respectively connected to the first cover 24 and the first housing 21, for fixing and connecting the first cover 24 and the first housing 21. Two right-angle sides of the second side plate 26b and the third side plate 26c of the second cover 25 are respectively connected to the second cover 25 and the first housing 21, for fixing and connecting the second cover 25 and the first housing 21. The distance from the oblique side of the second side plate 26b and the third side plate 26c of the first cover 24 to the inner wall of the first housing 21 gradually decreases from the end connected to the first cover 24 to the end away from the first cover 24. The distance from the oblique side of the second side plate 26b and the third side plate 26c of the second cover 25 to the inner wall of the first housing 21 gradually decreases from the end connected to the second cover 25 to the end away from the second cover 25. The second side plate 26b and the third side plate 26c of this structure have stability, and can significantly improve the structural strength of the first cover 24 and the first housing 21, the second cover 25 and the first housing 21.

In other embodiments, the second side plate 26b and the third side plate 26c are arc-shaped structures. The arc-shaped structures can also effectively improve the structural strength of the first cover 24 and the first housing 21, the second cover 25 and the first housing 21.

The second side plate 26b and the third side plate 26c are not limited to the above structures in the embodiments of the present disclosure, and can be arranged according to actual needs by a person skilled in the art.

In an embodiment, the projection of the terminal pole of the functional device along the first direction is located within a projection of the gap 26e along the first direction.

For example, the gap 26e has a trapezoidal structure with an opening at one end. The gap 26e is configured for the welding of the terminal pole of the battery cell 1, and the gap 26e is arranged on the side of the housing assembly to facilitate the installation and maintenance of the battery cell 1.

In an embodiment, the housing assembly 2 further includes the second housing 27 opposite to the first housing 21, the baffle wall 28 is arranged at both ends of the second housing 27 in the first direction, the second housing 27 is arranged on the first housing 21, the baffle wall 28 is arranged in the gap 26e, and the first direction represents the length direction of the first housing 21.

As shown in FIG. 1 and FIG. 5, the top of the second housing 27 is connected to the first cover 24. The bottom of the second housing 27 is connected to the second cover 25. The baffle wall 28 is embedded in the accommodation space in the trapezoidal structure. The second housing 27, the first cover 24, the first housing 21, the second cover 25, the baffle wall 28 and the second side plate 26b and the third side plate 26c form a cuboid, that is, the whole housing assembly 2 is a cuboid.

The arrangement of the second housing 27 and the first housing 21 facilitates the installation of the battery cell 1. The second housing 27 and the first housing 21 can effectively protect the battery cell 1.

The housing assembly 2 is not limited to the above structure in the embodiments of the present disclosure, and can be arranged according to actual needs by a person skilled in the art.

In an embodiment, the housing assembly 2 further includes a decorative cover 4, the decorative cover 4 is arranged on the outer wall of the second housing 27, and the outer wall of the second housing 27 is a surface of a side of the second housing 27 facing away from the battery cell 1.

In this embodiment, the decorative cover 4 is fixed on the outer wall of the second housing 27 by snapping, bolt connection, riveting, etc., and the appearance of the energy storage device can be improved.

In an embodiment, a second reinforcing structure is arranged on the outer wall of the second housing 27, and the second reinforcing structure is arranged between the decorative cover 4 and the second housing 27.

As shown in FIG. 1, the top of the second housing 27 is connected to the first cover 24. The bottom of the second housing 27 is connected to the second cover 25. The second housing 27, the first cover 24, the first housing 21, the second cover 25, the second side plate 26b, the third side plate 26c, and the baffle wall 28 are enclosed to form the housing assembly 2. The battery cell 1 is arranged inside the housing assembly 2 and is protected by the housing assembly 2. The second reinforcing structure is arranged on the outer wall of the second housing 27 by screws, and the second reinforcing structure is arranged opposite to the battery cell 1, so that the structural strength of the second housing 27 is enhanced by the second reinforcing structure. The second housing 27 cooperates with the first housing 21 to form the housing assembly 2, thereby fixing the battery cell 1 in the housing assembly 2. Since the second reinforcing structure is arranged on the outer wall of the second housing 27, the accommodation space is prevented from being wasted, the capacity of the energy storage device is improved, and the utilization rate of the accommodation space is effectively improved. The decorative cover 4 is fixed on the outer wall of the second housing 27 and covers the outside of the second reinforcing structure, so that the appearance of the energy storage device can be improved.

In an embodiment, the second reinforcing structure includes a second reinforcing rib 29, the second reinforcing rib 29 extends along the second direction, and the second direction represents the width direction of the second housing 27.

In this embodiment, as shown in FIG. 1, the second reinforcing rib 29 is made of metal, plastic, ceramic, etc. The second reinforcing rib 29 is a strip structure. The number of the second reinforcing rib 29 is one or more. For example, the second reinforcing rib 29 is fixed on the outer wall of the second housing 27 by bolt connection, riveting, snapping, welding, etc. The second reinforcing rib 29 extends along the second direction, and the structural strength of the second housing 27 can be enhanced by the second reinforcing rib 29.

The second reinforcing structure is not limited to the above embodiment, and can be arranged according to actual needs by a person skilled in the art.

In an embodiment, a sealing strip 5 is arranged at the edge of the second housing 27 and the first housing 21.

As shown in FIG. 5, the second housing 27 and the first housing 21 are arranged with sealing strips 5 at the edges, and for example, the first housing 21 and the second housing 27 are connected together by bolts, and the sealing strips 5 are pressed between the first housing 21 and the second housing 27. The compression amount of the sealing strips 5 is controlled to achieve the waterproof function of the housing assembly 2, so as to prevent impurities such as accumulated water and dust from entering the inside of the housing assembly 2 through the gap between the second housing 27 and the first housing 21 and damaging the battery cells 1. The sealing strips 5 are arranged to effectively keep the inside of the housing assembly 2 clean, thereby prolonging the service life of the energy storage device.

In an embodiment, an insulating frame 6 is fixed at at least one end of the inner wall of the first housing 21 along the first direction, an electric connection sheet 7 is fixed on the insulating frame 6, and a welding position 8 is arranged at a position corresponding to the electrode of the battery cell 1 on the electric connection sheet 7, and the first direction represents the length direction of the first housing 21.

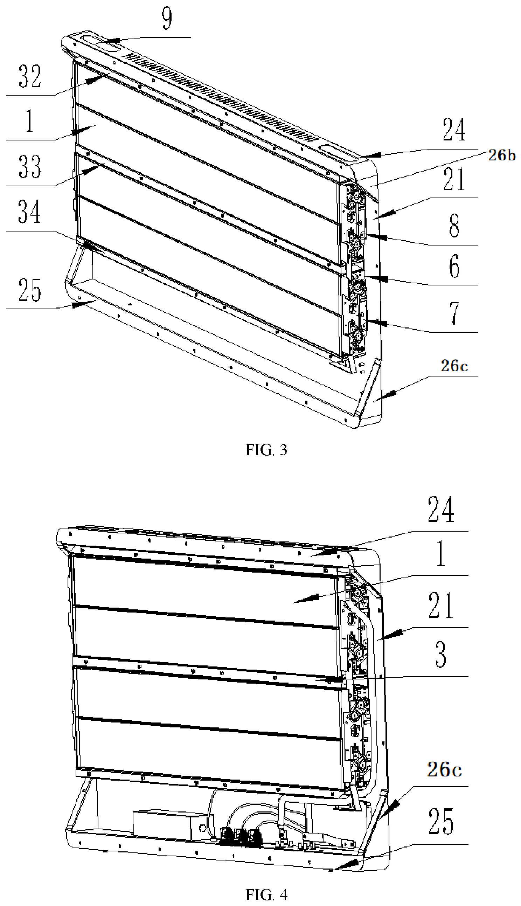

As shown in FIG. 1 and FIG. 4, the insulating frame 6 is arranged at at least one end of the inner wall of the first housing 21 in the length direction by bolt connection, snapping, riveting, etc. The insulating frame 6 is made of plastic, rubber, silica gel, ceramic, etc. The electric connection sheet 7 is arranged on the insulating frame 6 by bolt connection, riveting, snapping, etc. The electric connection sheet 7 is configured to connect with the output cable or the input cable of the battery cell 1 to achieve the charging and discharging function of the battery cell 1. The insulating frame 6 is not only configured to place the electric connection sheet 7, but also configured to arrange the cable. The cable is arranged on the insulating frame 6, so that the external part of the energy storage device is simple and the appearance is improved.

For example, the total negative electrode cable of the battery cell 1 is connected to the battery management system through one electric connection sheet 7, and the total positive electrode cable of the battery cell 1 is connected to the external output port through another electric connection sheet 7, so as to achieve the charging and discharging function of the battery cell 1. One voltage sampling line is connected to each battery cell 1, and the voltage sampling line is connected to the battery management system. The battery management system is connected to a communication cable. The communication cable is connected to the external communication port, so as to realize the communication between the energy storage device and the external equipment.

The housing assembly 2 is not limited to the above structure in the embodiments of the present disclosure, and can be arranged according to actual needs by a person skilled in the art.

In an embodiment, at least one of the first cover 24 and the second cover 25 is arranged with a handle 9.

As shown in FIG. 1, the first cover 24 is arranged with the handle 9 at both ends. The second cover 25 is arranged with the handle 9 at both ends. For example, the handle 9 is a strip-shaped through hole arranged on the first cover 24 and the second cover 25. When the wall-hanging operation is performed, the hand of the operator can pass through the strip-shaped through hole, so that the energy storage device can be effectively held, and the wall-hanging operation of the energy storage device can be easily performed through the handle 9.

The handle 9 is not limited to the above embodiment, and can be arranged according to actual needs by a person skilled in the art.

According to a second embodiment of the present disclosure, an energy storage device is provided. The energy storage device includes the housing assembly 2 according to any one of the above embodiments.

For example, the functional device is arranged in the accommodation space and is directly or indirectly arranged on the first housing 21.

According to a third embodiment of the present disclosure, an energy storage device is provided. The energy storage device includes the housing assembly 2. The functional device is the battery cell 1.

According to a fourth embodiment of the present disclosure, an energy storage device is provided. As shown in FIG. 1, the energy storage device includes the housing assembly 2 and the battery cell 1. The housing assembly 2 is configured to define an accommodation space. The housing assembly 2 includes:
the first housing 21; and
the first reinforcing structure, and the first reinforcing structure is arranged on an outer wall of the first housing 21. The outer wall of the first housing 21 is a surface of a side of the first housing 21 facing away from the accommodation space. The first reinforcing structure includes the first reinforcing rib 22, and the first reinforcing rib 22 extends along an arrangement direction of the battery cell 1.

As previously described, the first reinforcing rib 22 is arranged in this way to more effectively improve the structural strength of the housing assembly 2.

According to a fifth embodiment of the present disclosure, an energy storage system is provided. The energy storage system includes the energy storage device and the electric device. The energy storage device supplies power to the electric device. The energy storage device is any one of the energy storage devices described above.

In the above embodiments, the differences between the embodiments are mainly described. As long as the different optimization features between the embodiments are not contradictory, the different optimization features can be combined to form a better embodiment. For brevity, the details are not described herein.

Although some specific embodiments of the present disclosure have been described in detail by way of examples, a person skilled in the art will understand that the above examples are only for illustration, and are not intended to limit the scope of the present disclosure. A person skilled in the art will understand that the above embodiments can be modified without departing from the scope and spirit of the present disclosure. The scope of the present disclosure is defined by the appended claims.

## Claims

1. A housing assembly (2) configured to define an accommodation space, comprising:
a first housing (21); and
a first reinforcing structure, the first reinforcing structure being arranged on an outer wall of the first housing (21), and the outer wall of the first housing (21) being a surface of a side of the first housing (21) facing away from the accommodation space.

2. The housing assembly (2) according to claim 1, wherein the first reinforcing structure comprises:
a first reinforcing rib (22), the first reinforcing rib (22) extending along a first direction, and the first direction representing a length direction of the first housing.

3. The housing assembly (2) according to claim 1, wherein the first reinforcing structure comprises:
a first reinforcing rib (22), the first reinforcing rib (22) extending along a second direction, and the second direction representing a width direction of the first housing.

4. The housing assembly (2) according to claim 2, wherein a plurality of the first reinforcing ribs (22) are arranged on the outer wall of the first housing (21), and a number of the first reinforcing ribs (22) arranged in a middle region of the first housing (21) along the first direction is greater than a number of the first reinforcing ribs (22) arranged in two side regions of the first housing (21) along the first direction.

5. The housing assembly (2) according to claim 1, further comprising:
a wall hanging assembly (23), the wall hanging assembly (23) being arranged on the outer wall of the first housing (21), and the wall hanging assembly (23) being configured to hang the first housing (21) on a wall.

6. The housing assembly (2) according to claim 5, wherein the wall hanging assembly (23) comprises:
a first wall hanging piece (231) and a second wall hanging piece (232), and the first reinforcing structure is arranged between the first wall hanging piece (231) and the second wall hanging piece (232).

7. The housing assembly (2) according to claim 1, further comprising:
a fixing frame (3), the fixing frame (3) being arranged on a side of an inner wall of the first housing (21), and the fixing frame (3) being configured to carry a functional device.

8. The housing assembly (2) according to claim 7, wherein a limiting structure is arranged at both ends of the fixing frame (3), and the limiting structure is configured to position the functional device.

9. The housing assembly (2) according to claim 8, wherein the limiting structure is a limiting protrusion (31) formed by a folded edge at both ends of the fixing frame (3).

10. The housing assembly (2) according to claim 1, further comprising:
a first cover (24) and a second cover (25), the first cover (24) and the second cover (25) being arranged spaced apart on the inner wall of the first housing (21).

11. The housing assembly (2) according to claim 10, further comprising: a first side plate (26a), the first side plate (26a) being arranged on a side of the inner wall of the first housing (21), a side edge of the first side plate (26a) being connected to the inner wall of the first housing (21), and the first side plate (26a) being connected to same-side ends of the first cover (24) and the second cover (25).

12. The housing assembly (2) according to claim 11, wherein the first side plate (26a) is arranged with a notch (26d), and a projection of a terminal pole of the functional device along the first direction is located within a projection of the notch (26d) along the first direction.

13. The housing assembly (2) according to claim 12, further comprising: a second housing (27) opposite to the first housing (21), a baffle wall (28) being arranged at both ends of the second housing (27) in the first direction, the second housing (27) being arranged on the first housing (21), the baffle wall (28) being arranged in the notch (26d), and the first direction representing the length direction of the first housing (21).

14. The housing assembly (2) according to claim 10, further comprising: a second side plate (26b) and a third side plate (26c), the second side plate (26b) and the third side plate (26c) being arranged on a side of the inner wall of the first housing (21), and the second side plate (26b) and the third side plate (26c) being respectively connected to same-side ends of the first cover (24) and the second cover (25);
along the second direction, a gap (26e) being arranged between the second side plate (26b) and the third side plate (26c), and the second direction representing the width direction of the first housing (21).

15. The housing assembly (2) according to claim 14, wherein the projection of the terminal pole of the functional device along the first direction is located within a projection of the gap (26e) along the first direction.

16. The housing assembly (2) according to claim 15, further comprising: the second housing (27) opposite to the first housing (21), the baffle wall (28) being arranged at both ends of the second housing (27) in the first direction, the second housing (27) being arranged on the first housing (21), the baffle wall (28) being arranged in the gap (26e), and the first direction representing the length direction of the first housing (21).

17. The housing assembly (2) according to claim 13 or 16, further comprising: a decorative cover (4), the decorative cover (4) being arranged on an outer wall of the second housing (27), and the outer wall of the second housing (27) being a surface of a side of the second housing (27) facing away from the accommodation space.

18. The housing assembly (2) according to claim 17, wherein a second reinforcing structure is arranged on the outer wall of the second housing (27), and the second reinforcing structure is arranged between the decorative cover (4) and the second housing (27).

19. The housing assembly (2) according to claim 18, wherein the second reinforcing structure comprises: a second reinforcing rib (29), the second reinforcing rib (29) extends along a second direction, and the second direction represents the width direction of the second housing (27).

20. An energy storage device, comprising the housing assembly (2) according to any one of claims 1 to 19.

21. An energy storage device, comprising the housing assembly (2) according to any one of claims 7, 8, 12 and 15, wherein the functional device is a battery cell (1).

22. An energy storage device, comprising a housing assembly (2) and a battery cell (1), the housing assembly (2) being configured to define an accommodation space, and the housing assembly (2) comprising:
a first housing (21); and
a first reinforcing structure, the first reinforcing structure being arranged on an outer wall of the first housing (21), the outer wall of the first housing (21) being a surface of a side of the first housing (21) facing away from the accommodation space, and the first reinforcing structure comprising a first reinforcing rib (22), the first reinforcing rib (22) extends along an arrangement direction of the battery cell (1).

23. An energy storage system, comprising an energy storage device and an electric device, and the energy storage device being configured to supply power to the electric device, and the energy storage device being the energy storage device according to any one of claims 20 to 22.
